# EUROPÄISCHE PATENTANMELDUNG

(11) **EP 1 930 517 A2**
(43) Veröffentlichungstag der Anmeldung: **11.06.2008**
(21) Anmeldenummer: 07022623.8
(22) Anmeldetag: 21.11.2007
(51) Int. Cl.: E04B 2/78, F16B 5/06, G09F 15/00, F16B 7/18, E04B 1/58

(54) **System zum Erstellen von Aufbauten und Tragprofil**

(30) Priorität: 04.12.2006 DE 202006018839 U
(71) Anmelder: OCTANORM-VERTRIEBS-GMBH FÜR BAUELEMENTE, 70794 Filderstadt (DE)
(72) Erfinder: Bruder, Hans, 72631 Aichtal (DE)
(74) Vertreter: Wilhelm, Martin

(57) **Zusammenfassung**

System zum Erstellen von Aufbauten, gekennzeichnet durch wenigstens ein Tragprofil (12, 14) und wenigstens ein Klemmprofil (16, 18), wobei das Klemmprofil an eine Seitenfläche des Tragprofils (12, 14) anbaubar ist und wenigstens eine sich seitlich öffnende erste Nut (20, 22) aufweist, die im an die Seitenfläche angebauten Zustand des Klemmprofils (16, 18) sich in Bezug auf ihre Längsrichtung parallel zur Seitenfläche des Tragprofils (12, 14) erstreckt.

## Beschreibung

Die Erfindung betrifft ein System zum Erstellen von Aufbauten und ein Tragprofil zum Erstellen von Aufbauten.

Bekannte Systeme zum Erstellen von Aufbauten, insbesondere für Messestände, weisen Tragprofile auf, die untereinander mittels sogenannter Spannschlösser verbunden werden können. Die Spannschlösser werden in Kammern an der Stirnseite eines jeweiligen Tragprofils eingesetzt und die Tragprofile weisen mittig in ihren Seitenflächen in Längsrichtung verlaufende Nuten mit Hinterschnitten auf. Ein erstes Tragprofil kann dann stumpf auf die Seitenfläche eines weiteren Tragprofils aufgesetzt werden und durch Betätigen des Spannschlosses greift dieses mit Rasthaken hinter die Hinterschnitte der in Längsrichtung verlaufenden Nut und sichert dadurch die beiden Tragprofile aneinander. Die Spannschlösser sind vorzugsweise exzenterbetätigt, so dass aus solchen Tragprofilen beispielsweise Messestände sehr schnell aufgebaut werden können.

Mittels solcher Systeme werden zunächst Rahmenstrukturen der zu erstellenden Aufbauten aufgebaut. Die Rahmen können dann mit Füllungen ausgefüllt werden. Werden plattenförmige Füllungen in die Längsnuten in den Seitenflächen der Tragprofile eingesetzt, so kann es erforderlich sein, den Rahmenaufbau zum Einsetzen der Füllungen wieder lösen zu müssen oder die Füllungen bereits während des Aufbaus der Rahmenstruktur einzusetzen. Sollen Rahmen mit Stoff bespannt werden, so ist das Anbringen solcher Stoffbespannungen zeitaufwändig, da diese beispielsweise um die Tragprofile herumgelegt, auf Holzleisten festgetackert oder verklebt oder mittels Schlaufen auf Profilstäbe aufgefädelt werden müssen.

Mit der Erfindung soll ein System und ein Tragprofil zum Erstellen von Aufbauten bereitgestellt werden, das das Anbringen von Füllungen oder Stoffbespannungen wesentlich erleichtert.

Erfindungsgemäß ist hierzu ein System zum Erstellen von Aufbauten mit einem Tragprofil und einem Klemmprofil vorgesehen, wobei das Klemmprofil an eine Seitenfläche des Tragprofils anbaubar ist und wenigstens eine sich seitlich öffnende erste Nut aufweist, die im an die Seitenfläche angebauten Zustand des Klemmprofils sich in Bezug auf ihre Längsrichtung parallel zur Seitenfläche des Tragprofils erstreckt.

Mittels des Klemmprofils kann das Tragprofil in einfacher Weise mit sich seitlich öffnenden Nuten im Bereich der jeweiligen Seitenfläche des Tragprofils ergänzt werden. Diese Nuten können dann zum Einstecken von Füllungen oder Stoffbespannungen verwendet werden. Da das Klemmprofil an die Seitenfläche des Tragprofils anbaubar ist, kann dieses erst nach Erstellen einer Rahmengrundstruktur der Aufbauten an den Tragprofilen angebracht werden. Dadurch können auch bereits bestehende Aufbauten in einfacher Weise durch Füllungen oder Stoffbespannungen ergänzt werden.

In Weiterbildung der Erfindung erstreckt sich die erste Nut im an die Seitenfläche angebauten Zustand des Klemmprofils in Bezug auf ihre Tiefenrichtung parallel zur Seitenfläche des Tragprofils.

Eine Füllung oder eine Stoffbespannung kann dadurch parallel zur Seitenfläche des Tragprofils eingesteckt werden und es ist dadurch möglich, dass die Füllung sich bis unmittelbar vor die Seitenfläche des Tragprofils erstreckt. Darüber hinaus wird es dadurch möglich, dass beispielsweise eine Stoffbespannung annähernd fluchtend zu Außenflächen des Tragprofils angeordnet wird.

In Weiterbildung der Erfindung weist das Tragprofil in seiner Seitenfläche wenigstens eine in Längsrichtung verlaufende zweite Nut auf, wobei das Klemmprofil mit wenigstens einem in die zweite Nut eingreifenden Befestigungsmittel an dem Tragprofil befestigbar ist.

Auf diese Weise ist die problemlose Befestigung des Klemmprofils am Tragprofil möglich und die Klemmprofile können schnell und zuverlässig an das Tragprofil angebaut und wieder abgebaut werden.

In Weiterbildung der Erfindung weist die zweite Nut wenigstens einen Hinterschnitt auf und das Befestigungsmittel hintergreift im montierten Zustand den Hinterschnitt. Auf diese Weise kann eine extrem zuverlässige Befestigung geschaffen werden.

In Weiterbildung der Erfindung ist das Befestigungsmittel in einer ersten Winkelstellung zur zweiten Nut in diese einführbar und hintergreift in einer zweiten, von der ersten unterschiedlichen Winkelstellung zur zweiten Nut den Hinterschnitt. Vorteilhafterweise ist das Befestigungsmittel in seinem, in die zweite Nut einführbaren Abschnitt hakenartig ausgebildet.

Ein solcherart ausgebildetes Befestigungsmittel kann in sehr einfacher Weise in die zweite Nut im Tragprofil eingehängt werden. Durch einfaches Einstecken kann das Befestigungsmittel damit in der zweiten Nut gesichert werden und, um das Klemmprofil am Tragprofil zu befestigen, muss dann lediglich noch das Befestigungsmittel so eingestellt werden, dass es eine Kraft in Richtung auf das Tragprofil auf das Klemmprofil ausübt. Anstelle einer hakenartigen Gestaltung kann auch ein T-förmiges Ende am Befestigungselement vorgesehen sein, das gedreht wird, um den Hinterschnitt zu hintergreifen.

In Weiterbildung der Erfindung ist das Befestigungsmittel in seinem im montierten Zustand außerhalb der zweiten Nut liegenden Abschnitt mit einem Gewinde und einer Mutter versehen.

Mittels der Mutter kann das Klemmprofil dadurch gegen das Tragprofil gezogen werden. Dies ist insbesondere beim Anbringen von Stoffbespannungen von Vorteil, da die Stoffbespannung im noch entspannten oder nur wenig gespannten Zustand in das Klemmprofil eingehängt werden kann und dann erst durch das allmähliche Bewegen der Klemmprofile auf die Tragprofile zu gespannt wird. Diese allmähliche Bewegung der Klemmprofile kann dann durch einfaches Anziehen der Mutter auf dem Gewinde erfolgen.

In Weiterbildung der Erfindung ist das Klemmprofil mit einer Öffnung zum Durchstecken des Befestigungsmittels versehen, wobei die Öffnung so bemessen ist, dass das Befestigungsmittel bei an der Seitenfläche des Tragprofils anliegenden Klemmprofil die erste Winkelstellung einnehmen und in die zweite Nut eingeführt werden kann.

Auf diese Weise wird es möglich, das Klemmprofil zunächst in seine Endlage an der Seitenfläche des Tragprofils zu bringen, dort festzuhalten und erst dann das Befestigungsmittel in die Nut im Tragprofil einzuführen. Auf diese Weise kann das Klemmprofil sehr schnell am Tragprofil befestigt werden.

In Weiterbildung der Erfindung ist ein textiles Flächenelement vorgesehen, wobei das textile Flächenelement an wenigstens einer Seitenkante wenigstens abschnittsweise mit einem Keder versehen ist, der in die erste Nut des Klemmprofils einführbar ist.

Stoffbespannungen mit textilen Flächenelementen können dadurch sehr schnell und zuverlässig an den Klemmprofilen befestigt werden, da lediglich der Keder in die erste Nut eingeschoben werden muss. Dies erleichtert das schnelle Anbringen von Stoffbespannungen, wie es beispielsweise beim Aufbau von Messeständen erforderlich ist, erheblich. Indem das textile Flächenelement lediglich mit seinem Keder in die erste Nut des Klemmprofils eingeführt wird, ist das textile Flächenelement auch schnell und einfach, und ohne Beschädigungen befürchten zu müssen, wieder entfernbar.

In Weiterbildung der Erfindung weist der Keder zwei parallele Seitenflächen auf, deren Abstand zueinander auf die Breite der ersten Nut abgestimmt ist.

Auf diese Weise lässt sich der Keder einfach in die erste Nut des Klemmprofils einführen. Da im montierten Zustand das textile Flächenelement dann senkrecht zu der ersten Nut und den Kedern an seinen Seitenkanten ausgerichtet ist, halten die Keder das textile Flächenelement zuverlässig an den Klemmprofilen bzw. den Tragprofilen. Ein Zug in der Flächenebene des textilen Flächenelements führt lediglich dazu, dass sich die Keder in den Nuten verspannen. Es ist dadurch aber fast unmöglich, dass sich die Stoffbespannung versehentlich von den Klemmprofilen löst. Hierzu können auch der Keder und die erste Nut so aufeinander abgestimmt sein, dass diese mit einer für den sicheren Halt ausreichenden Reibungskraft in der ersten Nut gehalten werden. Es gibt dabei unterschiedliche Möglichkeiten, den Keder an der Stoffbespannung zu befestigen. Zum einen kann der Stoff in einfacher Weise um den Keder herumgelegt werden, so dass der Keder dann in einer Stoffschlaufe am Rande des textilen Flächenelements liegt. Es ist aber beispielsweise auch möglich, den Keder mit einer Annählasche zu versehen, an die das textile Flächenelement dann angenäht wird.

In Weiterbildung der Erfindung ist das textile Flächenelement dehnbar ausgebildet.

Auf diese Weise lassen sich in einfacher Weise faltenfreie Stoffbespannungen erzielen. Das erfindungsgemäße System erleichtert dabei durch die Möglichkeit, die Keder des textilen Flächenelements zunächst in die Klemmprofile einzustecken und erst dann die Klemmprofile an den Tragprofilen zu befestigen, das Anbringen solcher dehnbaren textilen Flächenelemente erheblich.

In Weiterbildung der Erfindung sind wenigstens vier, einen Rahmen bildende Tragprofile mit angebauten Klemmprofilen vorgesehen, wobei das textile Flächenelement an allen vier Seitenkanten mit einem Keder versehen ist und wobei das textile Flächenelement dehnbar ausgebildet und im entspannten Zustand flächenmäßig kleiner als die vom Rahmen umschlossene Fläche ist.

Das der Erfindung zugrundeliegende Problem wird auch durch ein Tragprofil zum Erstellen von Aufbauten gelöst, bei dem wenigstens eine sich seitlich öffnende erste Nut unmittelbar hinter einer Seitenfläche des Tragprofils vorgesehen ist, wobei sich diese erste Nut sowohl in Bezug auf ihre Längsrichtung als auch ihre Tiefenrichtung parallel zur Seitenfläche des Tragprofils erstreckt.

Solche Tragprofile sind insbesondere zum Einstecken von Füllungen oder Stoffbespannungen geeignet, wobei dadurch, dass die seitlich öffnenden ersten Nuten unmittelbar hinter einer Seitenfläche des Tragprofils vorgesehen sind, die Füllungen oder Stoffbespannungen annähernd fluchtend mit der Seitenfläche des Tragprofils angeordnet werden können.

In Weiterbildung der Erfindung ist die erste Nut wenigstens abschnittsweise mit zueinander parallel verlaufenden Seitenwänden versehen.

Solche parallel zueinander verlaufenden Seitenwände erleichtern das Einstecken von Kedern von Stoffbespannungen oder das Einschieben von plattenförmigen Füllungen.

Weitere Merkmale und Vorteile der Erfindung ergeben sich aus der nachfolgenden Beschreibung im Zusammenhang mit den Zeichnungen.

Einzelmerkmale der unterschiedlichen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine perspektivische, abschnittsweise Darstellung eines erfindungsgemäßen Systems zum Erstellen von Aufbauten mit Tragprofilen und Klemmprofilen, wobei die Klemmprofile sowohl im angebauten als auch im abgebauten Zustand dargestellt sind,
- Fig. 2: eine perspektivische, abschnittsweise Darstellung des Systems der Fig. 1 mit teilweise angebrachter Stoffbespannung,
- Fig. 3: eine teilweise geschnittene Ansicht eines erfindungsgemäßen Systems mit einem Tragprofil und einem an das Tragprofil angebauten Klemmprofil,
- Fig. 4 und Fig. 5: ein erfindungsgemäßes System mit einem Tragprofil und einem Klemmprofil, wobei Fig. 4 und Fig. 5 unterschiedliche Stadien beim Anbringen eines Befestigungsmittels zeigen,
- Fig. 6: eine Ansicht des Befestigungsmittels der Fig. 4 von unten,
- Fig. 7: eine Ansicht des Befestigungsmittels der Fig. 4 von der Seite,
- Fig. 8: ein weiteres erfindungsgemäßes System mit einem Tragprofil und einem Klemmprofil,
- Fig. 9: ein weiteres erfindungsgemäßes System mit einem Tragprofil und einem Klemmprofil,
- Fig. 10: ein weiteres erfindungsgemäßes System mit einem Tragprofil und einem Klemmprofil,
- Fig. 11: das System der Fig. 9 in einer Ausgestaltung,
- Fig. 12: eine Schnittansicht eines erfindungsgemäßen Tragprofils,
- Fig. 13: eine mit dem Tragprofil der Fig. 11 aufgebaute Rahmenecke, an der eine Stoffbespannung teilweise befestigt ist,
- Fig. 14: ein mit einem weiteren erfindungsgemäßen Tragprofil aufgebautes Rahmenkreuz,
- Fig. 15: eine Draufsicht auf einen Wandaufbau mit dem Tragprofil der Fig. 14 und
- Fig. 16: einen weiteren Wandaufbau mit dem Tragprofil der Fig. 14.

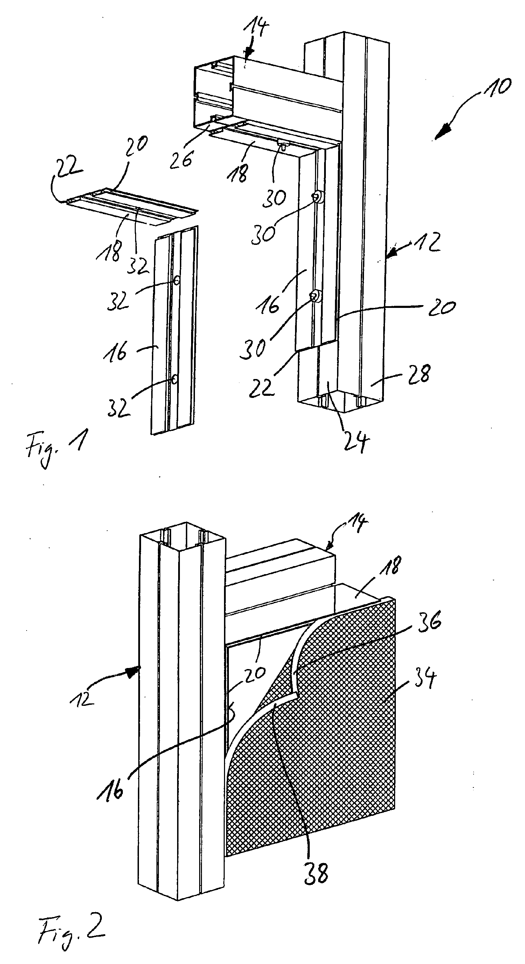

Die abschnittsweise perspektivische Darstellung der Fig. 1 zeigt ein System 10 zum Erstellen von Aufbauten mit zwei Tragprofilen 12, 14 und an die Tragprofile 12, 14 angebauten Klemmprofilen 16, 18. Die Klemmprofile 16, 18 sind einmal im angebauten Zustand an die Tragprofile 12, 14 und einmal im hiervon abgenommenen Zustand dargestellt. Die Klemmprofile 16, 18 weisen an ihren Längsseiten jeweils eine sich seitlich öffnende erste Nut 20, 22 auf. Diese erste Nuten 20, 22 weisen zueinander parallele innere Seitenwände auf und erstrecken sich sowohl in ihrer Längsrichtung als auch in ihrer Tiefenrichtung parallel zu einer Längsrichtung der Klemmprofile 16, 18. Die inneren Seitenwände sind glatt ausgebildet und die ersten Nuten 20, 22 weisen keine Hinterschnitte auf.

Das Klemmprofil 16 ist an eine Seitenfläche 24 des Tragprofils 12 angebaut und das Klemmprofil 18 ist an eine Seitenfläche 26 des Tragprofils 14 angebaut. Die seitlichen ersten Nuten 20, 22 des Klemmprofils 16 erstrecken sich in Bezug auf ihre Längsrichtung parallel zur Seitenfläche 24 des Tragprofils 12 und erstrecken sich auch in Bezug auf ihre Tiefenrichtung parallel zur Seitenfläche 24 des Tragprofils 12. Eine Füllung oder ein Keder einer Stoffbespannung kann dadurch parallel zur Seitenfläche 24 bzw. parallel zur Seitenfläche 26 in die Nuten 20, 22 eingeschoben werden. Eine plattenartige Füllung kann dadurch unmittelbar angrenzend an die Seitenfläche 24 bzw. 26 zu liegen kommen und eine Stoffbespannung, die dann auf der Seite der Nut 20 senkrecht zur Seitenfläche 24 bzw. 26 verläuft, ist dann im Wesentlichen bündig zu einer weiteren Seitenfläche 28 des Tragprofils 12.

Das Klemmprofil 16 und das Klemmprofil 18 sind jeweils mittels Befestigungsmitteln 30 an dem Tragprofil 12 bzw. dem Tragprofil 14 befestigt. Der Aufbau dieser Befestigungsmittel 13 wird nachfolgend noch detailliert erläutert. Die Klemmprofile 16, 18 sind jeweils mit Öffnungen 32 versehen, um die Befestigungsmittel 30 hindurchstecken zu können.

Bereits anhand der Fig. 1 ist zu erkennen, dass die Klemmprofile 16, 18 in besonders einfacher Weise an die Tragprofile 12, 14 angebaut werden können. Die Klemmprofile 16, 18 müssen lediglich an die Seitenflächen 24 bzw. 26 der Tragprofile 12 bzw. 14 angelegt werden und dann können die Befestigungsmittel 30 durch die Öffnungen 32 eingeführt und angezogen werden. Die Klemmprofile 16, 18 ermöglichen es dadurch, die Tragprofile 12, 14 in besonders einfacher Weise mit Füllungen und speziell Stoffbespannungen zu versehen.

Die Darstellung der Fig. 2 zeigt ein textiles Flächenelement 34, das an seinen Seitenkanten mit Kedern 36, 38 versehen ist. Diese Keder 36, 38 sind jeweils im Querschnitt rechteckförmig aufgebaut und ihre im Querschnitt gesehen längeren Seiten liegen dadurch in zueinander parallelen Seitenflächen. Die Keder 36, 38 werden dann so in die Nuten 20, 22 der Klemmprofile 16, 18 eingeschoben, dass die größeren Seitenflächen an den inneren Seitenwänden der Nut 20 anliegen. Das textile Flächenelement 34 selbst erstreckt sich im angebauten Zustand dann senkrecht zu den Kedern 36, 38 und damit auch senkrecht zu den Klemmprofilen 16, 18. Es ist zu erkennen, dass das textile Flächenelement 34 dadurch sehr sicher in den Klemmprofilen 16, 18 und damit mittelbar auch an den Tragprofilen 12, 14 gehalten ist, da eine Zugkraft in der Flächenebene des textilen Flächenelements 34 nicht dazu führen kann, dass die Keder 36, 38 aus den Nuten 20 herausgezogen werden, da die Keder 36, 38 im angebauten Zustand ja senkrecht zur Flächenebene des textilen Flächenelements 34 liegen. Es ist dadurch auch möglich, das textile Flächenelement 34 unter Vorspannung zu setzen, so dass eine gleichmäßige, faltenfreie Oberfläche des textilen Flächenelements 34 gewährleistet werden kann. Die Erfindung ermöglicht es dadurch, in einfacher Weise Stoffbespannungen an Aufbauten aus Tragprofilen 12, 14 anzubringen.

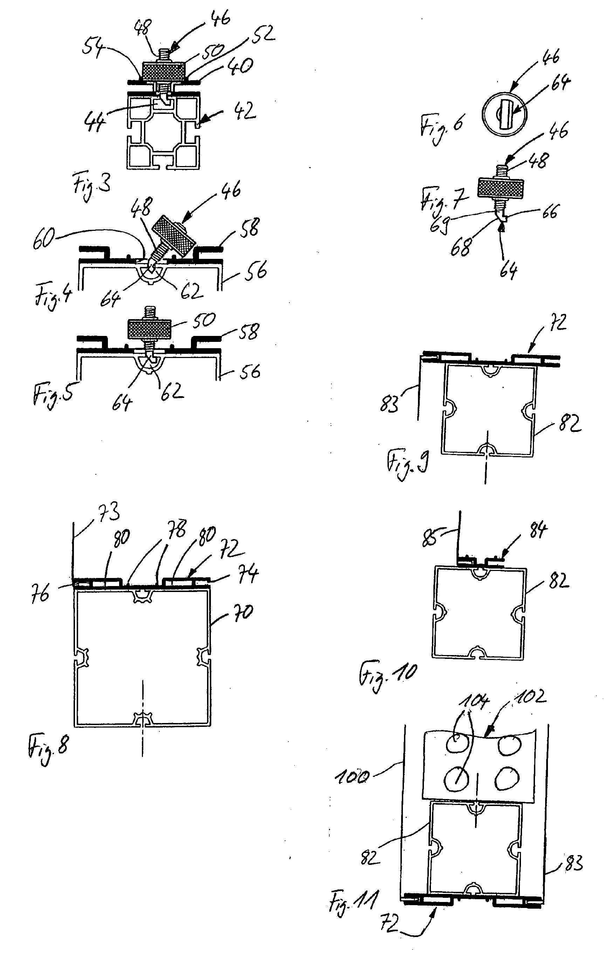

Die Darstellung der Fig. 3 zeigt detailliert die Befestigung einer Klemmleiste 40 an einem Tragprofil 42. Das Tragprofil 42 ist in jeder seiner Seitenflächen mittig mit einer Nut 44 versehen, die zu beiden Seiten der Nutöffnung einen Hinterschnitt ausbildet. In die Nut 44 des Tragprofils 42 wird ein Befestigungsmittel 46 eingeführt, das an seinem, sich in die Nut 44 erstreckenden Ende hakenartig ausgebildet ist. Dieses hakenartige Ende kann dadurch den Hinterschnitt der Nut 44 hintergreifen und Zugkräfte auf das Tragprofil 42 übertragen. In seinem außerhalb der Nut 44 liegenden Abschnitt ist das Befestigungsmittel 46 mit einem Außengewinde 48 versehen. Auf dieses Außengewinde 48 ist eine Rändelmutter 50 aufgeschraubt, die von Hand und damit werkzeuglos arretiert oder festgezogen werden kann. Die Rändelmutter 50 drückt nun das Klemmprofil 40 gegen die Seitenfläche des Tragprofils 42 und hält das Klemmprofil 40 dadurch zuverlässig am Tragprofil 42.

Das Klemmprofil 40 ist an seiner, dem Tragprofil 42 abgewandten Seite mit zwei leistenartigen Vorsprüngen 52, 54 versehen. Diese beiden leistenartige Vorsprünge 52, 54 lassen zwischen sich einen Abstand, der im Wesentlichen dem Durchmesser der Rändelmutter 50 entspricht. Nachdem die Rändelmutter 50 angezogen ist, liegt diese mit ihren Seitenflächen damit an den jeweiligen Innenseiten der leistenartigen Vorsprünge 52, 54 an. Auch wenn dann auf die Rändelmutter 50 oder das Außengewinde 48 des Befestigungsmittels 46 eine seitliche Kraft, beispielsweise ein Hammerschlag, ausgeübt wird, löst sich das Befestigungsmittel 46 dadurch nicht vom Tragprofil 42, da die Rändelmutter 50 durch die beiden leistenartigen Vorsprünge 52, 54 in ihrer in Fig. 3 dargestellten Lage gehalten wird. Die Vorsprünge 52, 54 bewirken gleichzeitig die exakte Positionierung des Klemmprofils 40 auf dem Tragprofil 42 in Verbindung mit dem Befestigungsmittel 46.

Die Fig. 4 und 5 zeigen das Anbringen des Befestigungsmittels 46 an einem Tragprofil 56. Ein Klemmprofil 58 ist in der Darstellung der Fig. 4 auf eine Seitenfläche des Tragprofils 56 aufgelegt und das Klemmprofil 58 weist eine Öffnung 60 auf, die oberhalb einer Nut 62 in der Seitenfläche des Tragprofils 56 angeordnet ist. Die Öffnung 60 ist dabei größer als der Außendurchmesser des Außengewindes 48 des Befestigungsmittels 46 bemessen, so dass das Befestigungsmittel 46, wie in Fig. 4 dargestellt ist, schräg zum Klemmprofil 58 angesetzt werden kann. In der in Fig. 4 dargestellten Stellung kann der hakenförmige Abschnitt 64 des Befestigungselements 46 in die Nut 62 eingeführt werden. Nach dem Einführen des hakenartigen Abschnitts 64 in die Nut 62 wird das Befestigungselement 46 dann in die in Fig. 5 dargestellte Winkelstellung gebracht und steht dann senkrecht zur Seitenfläche des Tragprofils 56. Wie zu erkennen ist, greift der hakenförmige Abschnitt 64 dadurch einseitig hinter den Hinterschnitt der Nut 62. Nachfolgend muss lediglich noch die Rändelmutter 50 angezogen werden, um das Klemmprofil 58 an dem Tragprofil 56 zu sichern.

Die Darstellungen der Fig. 6 und 7 zeigen das Befestigungselement 46 in einer Ansicht von unten bzw. einer Seitenansicht. In der Seitenansicht der Fig. 7 ist gut zu erkennen, dass der hakenartige Abschnitt 64 auf der einen Seite mit einem Vorsprung 66 versehen ist, der sich über den Außendurchmesser des Außengewindes 48 hinaus erstreckt. Der Vorsprung 66 bildet dadurch eine rechtwinklige Innenecke mit einem Schaft des Befestigungsmittels 46 aus. Gegenüberliegend dem Vorsprung 66 ist eine Abschrägung 68 vorgesehen. Zwischen der Abschrägung 68 und dem Außengewinde 48 bzw. dem Vorsprung 66 und dem Außengewinde 48 ist ein kurzer Schaftabschnitt 69 angeordnet, dessen Außendurchmesser nur geringfügig kleiner ist als die lichte Weite der Nut 62 auf Höhe der Seitenfläche des Tragprofils 56, die dem Klemmprofil 58 zugewandt ist. Die Abschrägung 68 ist so angeordnet, dass eine Querabmessung des hakenartigen Abschnitts 64 senkrecht zur Abschrägung 68 kleiner ist als die Breite der Öffnung der Nut 62. Dadurch ist es möglich, wie anhand der Fig. 4 und 5 erläutert wurde, das Befestigungselement 46 mit seinem hakenartigen Abschnitt 64 in der ersten, in Fig. 4 dargestellten Winkelstellung in die Nut 62 einzuführen. Nach dem Verkippen in die zweite Winkelstellung, die in der Fig. 5 dargestellt ist, kann das Befestigungsmittel 46 dann aber nicht mehr senkrecht zur Seitenfläche des Tragprofils 56 aus der Nut 62 herausgezogen werden, da der Vorsprung 66 dann in den Hinterschnitt der Nut 62 einhakt und eine seitliche Verschiebung des Vorsprungs 66 dadurch blockiert ist, dass der Schaft des Befestigungselements 30 annähernd die Breite der Öffnung der Nut 62 aufweist.

Die Ansicht von unten der Fig. 6 des Befestigungsmittels 46 zeigt, dass der hakenartige Abschnitt 64 gegenüber dem Schaft und dem Außengewinde 48 stark verbreitert ist. Der Vorsprung 66 kann dadurch über eine Länge, die etwa dem Dreifachen des Außendurchmessers des Außengewindes 48 entspricht, an dem Hinterschnitt der Nut 62 angreifen und dadurch eine gleichmäßige Krafteinleitung in das Tragprofil 56 sicherstellen.

Die Darstellung der Fig. 8 zeigt ein Tragprofil 70 mit einem auf einer Seitenfläche des Tragprofils 70 aufliegenden Klemmprofil 72. Das Klemmprofil 72 ist genauso breit wie das Tragprofil 70, so dass eine an dem Klemmprofil 72 angeordnete und schematisch angedeutete Stoffbespannung 75 im Wesentlichen fluchtend zu den Außenseiten des Tragprofils 70 verlaufen kann. Es ist weiter zu erkennen, dass das Klemmprofil 72 neben den sich seitlich öffnenden Nuten 74, 76 und leistenartigen Vorsprüngen 78 zum Halten der Rändelmutter 50 mit zwei Hohlkammern 80 versehen ist, die sich jeweils an die Nuten 74 bzw. 76 anschließen. Durch diese Hohlkammern 80 kann das Klemmprofil 72 wesentlich versteift werden. Das Klemmprofil 72 kann dadurch in Bezug auf seine Höhe vergleichsweise breit und dennoch stabil ausgebildet werden, beispielsweise als Aluminiumstrangpressprofil.

Die Darstellung der Fig. 9 zeigt das Klemmprofil 72 aufgesetzt auf ein Tragprofil 82. Das Tragprofil 82 ist dabei schmäler als das Klemmprofil 72, so dass eine am Klemmprofil 72 angebrachte und schematisch angedeutete Stoffbespannung im Abstand vor dem Tragprofil 82 vorbeigeführt werden kann. Auf diese Weise kann beispielsweise eine tragende Rahmenstruktur aus Tragprofilen 82 vollständig verborgen werden.

Die Darstellung der Fig. 10 zeigt das Tragprofil 82 mit einem aufgesetzten Klemmprofil 84. Das Klemmprofil 84 ist deutlich schmäler ausgebildet als das Klemmprofil 72 und auch schmäler als das Tragprofil 82. Eine mittels des Tragprofils 84 angebrachte und schematisch angedeutete Stoffbespannung 85 lässt dadurch eine Rahmenstruktur aus Tragprofilen 82 gut erkennen und füllt lediglich die Zwischenräume einer solchen Rahmenstruktur aus, wobei die Stoffbespannung 85 zusätzlich gegenüber einer Außenseite des Tragprofils 82 zurückgesetzt ist.

Die Darstellung der Fig. 11 zeigt das Tragprofil 82, das Klemmprofil 72 und die Stoffbespannung 83 aus der Fig. 9 in einer weiteren Ausführungsform der Erfindung. Zusätzlich zur Stoffbespannung 83 ist auf der gegenüberliegenden Seite des symmetrisch ausgebildeten Klemmprofils 72 eine weitere Stoffbespannung 100 angeordnet worden. Dadurch entsteht eine auf zwei Seiten mit Stoff bespannte Wand, die beispielsweise als Trennwand verwendet werden kann. Dadurch, dass das Klemmprofil 72 über die seitlichen Begrenzungen des Tragprofils 82 hinaussteht, ist diese dadurch entstandene Trennwand vergleichsweise dick. Dadurch wird zwischen den beiden Stoffbespannungen 83, 100 Platz für die Anordnung einer Hinterleuchtung 102 der Stoffbespannungen 83, 100 geschaffen. Die Hinterleuchtung 102 ist in der Darstellung der Fig. 11 schematisch angedeutet, wobei die Hinterleuchtung 102 mehrere Leuchtmittel 104 aufweist.

Schmäler ausgebildete Hinterleuchtungen können aber beispielsweise auch zwischen zwei Stoffbespannungen bei den in Fig. 8 und Fig. 10 gezeigten Ausführungsformen der Erfindung angeordnet werden.

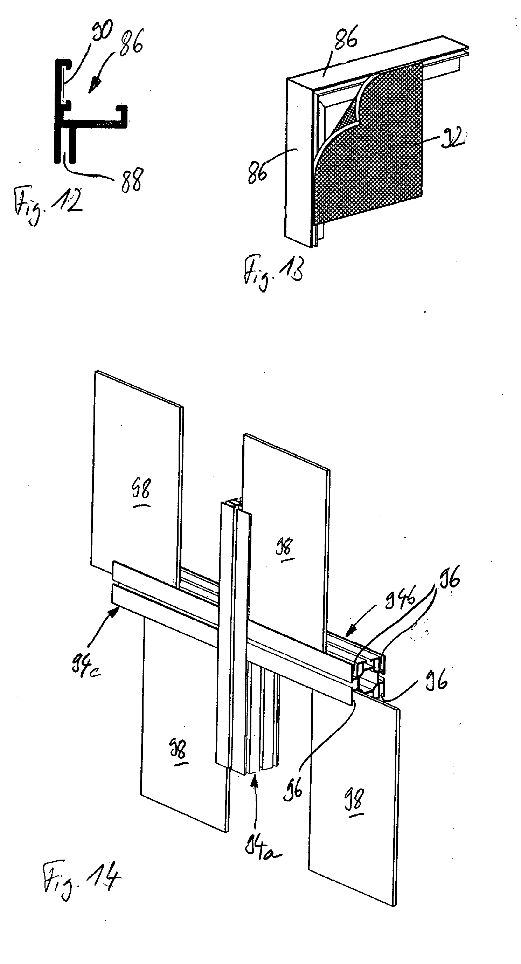

Die Darstellung der Fig. 12 zeigt ein erfindungsgemäßes Tragprofil 86, das mit einer sich seitlich öffnenden ersten Nut 88 versehen ist. In diese Nut 88 können, wie beschrieben, Füllungen oder Keder von Stoffbespannungen eingeschoben werden. Eine Eckverstärkung 90 ermöglicht es, zwei Tragprofile 86 zu einer Rahmenecke zu verbinden. Eine Rahmenkonstruktion, beispielsweise bestehend aus vier Tragprofilen 86, kann beispielsweise als Deckensegel eingesetzt werden und mittels Drahtseilaufhängungen, die in den der Nut 88 gegenüberliegenden zwei Nuten befestigt sind, von der Decke abgehängt werden.

Die Darstellung der Fig. 13 zeigt eine Rahmenecke, die aus zwei Tragprofilen 86 aufgebaut ist. Ein textiles Flächenelement 92 ist an seinen Seitenkanten mit Kedern versehen, die in die Nuten 88 der Tragprofile 86 eingeschoben sind.

Die Darstellung der Fig. 14 zeigt drei weitere erfindungsgemäße Tragprofile 94a, 94b, 94c, die zu einem Rahmenkreuz zusammengebaut sind. Die Tragprofile 94a, 94b, 94c weisen jeweils vier sich seitlich öffnende Nuten 96 mit zueinander parallelen Seitenwänden auf, in die beispielsweise Platten 98 eingesetzt werden können.

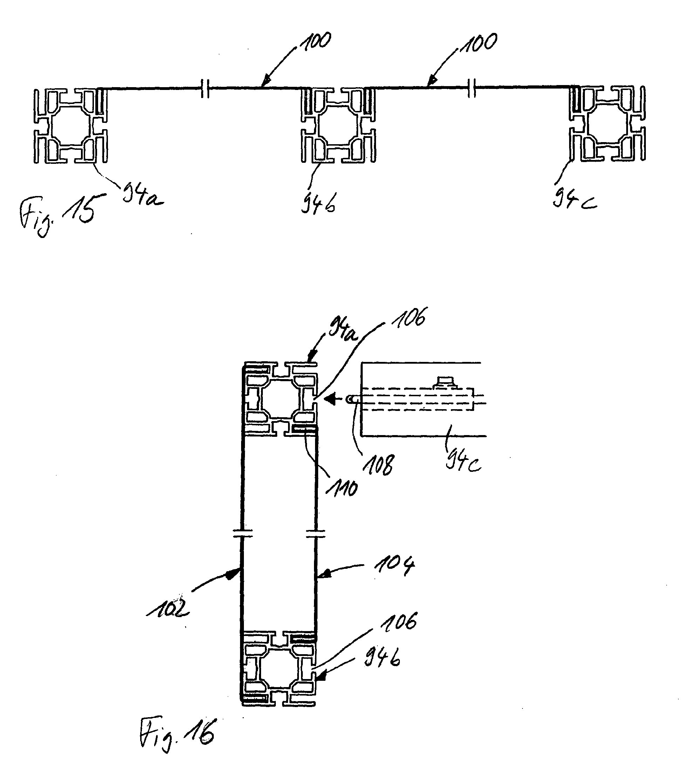

Die Darstellungen der Fig. 15 und 16 zeigen Draufsichten auf Wandaufbauten mit Tragprofilen 94a, 94b, 94c. In der Darstellung der Fig. 15 ist zwischen jeweils zwei Tragprofilen 94a, 94b, 94c eine Stoffbespannung 100 angeordnet. Wie zu erkennen ist, verlaufen die Stoffbespannungen 100 annähernd fluchtend zu einer in der Darstellung der Fig. 15 oben liegenden Außenseite der Tragprofile 94a, 94b, 94c. Bei dem in Fig. 14 gewählten Aufbau sind die Außenseiten der Tragprofile 94a, 94b, 94c abschnittsweise sichtbar.

Die Darstellung der Fig. 16 zeigt einen weiteren Wandaufbau mit drei Tragprofilen 94a, 94b, 94c. Eine erste Stoffbespannung 102 ist auf einer in der Darstellung der Fig. 15 links liegenden Außenseite der Tragprofile 94a, 94b so angebracht, dass die Tragprofile 94a, 94c auf dieser Seite annähernd vollständig überdeckt sind. Eine weitere Stoffbespannung 104 auf der in der Darstellung der Fig. 15 rechts liegenden Seite der Tragprofile 94a, 94b ist dahingegen so angeordnet, dass die Tragprofile 94a, 94b noch sichtbar sind und dass eine mittlere, mit Hinterschnitten versehene zweite Nut 106 der Tragprofile 94 frei liegt. In diese Nut 106 kann ein in der Darstellung der Fig. 15 lediglich schematisch dargestelltes Spannschloss 108 eingreifen, wodurch dann ein weiteres Tragprofil 94c senkrecht an die in der Darstellung der Fig. 15 rechts liegenden Außenseiten der mit der Stoffbespannung 102, 104 versehenen Tragprofile 94a, 94b angesetzt werden kann.

Es ist dabei zu erkennen, dass im angebauten Zustand das Tragprofil 94c den Keder 110 der Stoffbespannung 104 überdeckt. Auf diese Weise können optisch sehr ansprechende Gestaltungen mit Stoffbespannungen erzielt werden.

## Patentansprüche

1. System zum Erstellen von Aufbauten, **gekennzeichnet durch** wenigstens ein Tragprofil (12, 14; 42; 56; 70; 82) und wenigstens ein Klemmprofil (16, 18; 40; 58; 72; 84), wobei das Klemmprofil an eine Seitenfläche des Tragprofils (12, 14; 42; 56; 70; 82) anbaubar ist und wenigstens eine sich seitlich öffnende erste Nut (20, 22; 74) aufweist, die im an die Seitenfläche angebauten Zustand des Klemmprofils (16, 18; 40; 58; 72; 84) sich in Bezug auf ihre Längsrichtung parallel zur Seitenfläche des Tragprofils (12, 14; 42; 56; 70; 82) erstreckt.

2. System nach Anspruch 1, **dadurch gekennzeichnet, dass** sich die erste Nut (20, 22; 74) im an die Seitenfläche angebauten Zustand des Klemmprofils (16, 18; 40; 58; 72; 84) in Bezug auf ihre Tiefenrichtung parallel zur Seitenfläche des Tragprofils (12, 14; 42; 56; 70; 82) erstreckt.

3. System nach Anspruch 1 oder 2, **dadurch gekennzeichnet, dass** das Tragprofil (12, 14; 42; 56; 70; 82) in seiner Seitenfläche wenigstens eine in Längsrichtung verlaufende zweite Nut (44; 62) aufweist, wobei das Klemmprofil (16, 18; 40; 58; 72; 84) mit wenigstens einem in die zweite Nut (44; 62) eingreifenden Befestigungsmittel (30) an dem Tragprofil (12, 14; 42; 56; 70; 82) befestigbar ist.

4. System nach wenigstens einem der vorstehenden Ansprüche, **dadurch gekennzeichnet, dass** die zweite Nut (44; 62) wenigstens einen Hinterschnitt aufweist und das Befestigungsmittel (30) im montierten Zustand den Hinterschnitt hintergreift.

5. System nach Anspruch 4, **dadurch gekennzeichnet, dass** das Befestigungsmittel (30) in einer ersten Winkelstellung zur zweiten Nut (44; 62) in diese einführbar ist und in einer zweiten, von der ersten unterschiedlichen Winkelstellung zur zweiten Nut (44; 62) den Hinterschnitt hintergreift

6. System nach Anspruch 4 oder 5, **dadurch gekennzeichnet, dass** das Befestigungsmittel (30) in seinem in die zweite Nut (44; 62) einführbaren Abschnitt hakenartig ausgebildet ist.

7. System nach wenigstens einem der Ansprüche 3 bis 6, **dadurch gekennzeichnet, dass** das Befestigungsmittel (30) in seinem im montierten Zustand außerhalb der zweiten Nut (44; 62) liegenden Abschnitt mit einem Gewinde (48) und einer Mutter (50) versehen ist.

8. System nach Anspruch 6 und 7, **dadurch gekennzeichnet, dass** das Klemmprofil (16, 18; 40; 58; 72; 84) mit einer Öffnung (32; 60) zum Durchstecken des Befestigungsmittels (30) versehen ist, wobei die Öffnung (32; 60) so bemessen ist, dass das Befestigungsmittel (30) bei an der Seitenfläche des Tragprofils (12, 14; 42; 56; 70; 82) anliegendem Klemmprofil (16, 18; 40; 58; 72; 84) die erste Winkelstellung einnehmen und in die zweite Nut (44; 62) eingeführt werden kann.

9. System nach wenigstens einem der vorstehenden Ansprüche, weiter **gekennzeichnet durch** ein textiles Flächenelement (34), wobei das textile Flächenelement (34) an wenigstens einer Seitenkante wenigstens abschnittsweise mit einem Keder (36, 38) versehen ist, der in die erste Nut (20, 22; 74) des Klemmprofils (16, 18; 40; 58; 72; 84) einführbar ist.

10. System nach Anspruch 9, **dadurch gekennzeichnet, dass** der Keder (36, 38) zwei parallele Seitenflächen aufweist, deren Abstand zueinander auf die Breite der ersten Nut (20, 22; 74) abgestimmt ist.

11. System nach Anspruch 9 oder 10, **dadurch gekennzeichnet, dass** das textile Flächenelement (34) dehnbar ausgebildet ist.

12. System nach wenigstens einem der Ansprüche 9 bis 11, **gekennzeichnet durch** wenigstens vier, einen Rahmen bildende Tragprofile (12, 14; 42; 56; 70; 82) mit angebauten Klemmprofilen (16, 18; 40; 58; 72; 84), wobei das textile Flächenelement (34) an allen vier Seitenkanten mit einem Keder (36, 38) versehen ist und wobei das textile Flächenelement (34) dehnbar ausgebildet und im entspannten Zustand flächenmäßig kleiner als die vom Rahmen umschlossene Fläche ist.

13. Tragprofil zum Erstellen von Aufbauten, **gekennzeichnet durch** wenigstens eine sich seitlich öffnende erste Nut (88; 96) unmittelbar hinter einer Seitenfläche des Tragprofils (86; 94), die sich sowohl in Bezug auf ihre Längsrichtung als auch ihre Tiefenrichtung parallel zur Seitenfläche des Tragprofils (86; 94) erstreckt.

14. Tragprofil nach Anspruch 13, **dadurch gekennzeichnet, dass** die erste Nut (88; 96) wenigstens abschnittsweise zueinander parallel verlaufende Seitenwände aufweist.
